# EUROPÄISCHE PATENTSCHRIFT

(11) **EP 4 046 746 B1**
(45) Veröffentlichungstag und Bekanntmachung des Hinweises auf die Patenterteilung: **10.07.2024**
(21) Anmeldenummer: 22156858.7
(22) Anmeldetag: 15.02.2022
(51) Int. Cl.: B23Q 5/04, B23Q 5/12, B23G 1/46

(54) **WERKZEUGKOPPELVORRICHTUNG MIT ÜBERSETZUNGSEINHEIT UND VERFAHREN ZUM ERZEUGEN EINES GEWINDES ODER EINES GEWINDELOCHS**
TOOL COUPLING DEVICE WITH TRANSLATION UNIT AND METHOD FOR PRODUCING A THREAD OR A THREADED HOLE
DISPOSITIF D'ACCOUPLEMENT D'OUTIL À L'UNITÉ DE TRANSMISSION ET PROCÉDÉ DE CRÉATION D'UN FILETAGE OU D'UN TROU FILETÉ

(30) Priorität: 19.02.2021 DE 102021103992
(43) Veröffentlichungstag der Anmeldung: 24.08.2022
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: Hertlein, Alexander, 90425 Nürnberg (DE); Porath, Rainer, 90562 Heroldsberg (DE)
(74) Vertreter: Schröer, Gernot H.

(56) Entgegenhaltungen:
- EP-A2- 0 378 239
- EP-A2- 2 361 712
- WO-A1-2019/238175

## Beschreibung

Die Erfindung betrifft eine Werkzeugkoppelvorrichtung und ein Verfahren zum Erzeugen eines Gewindes oder eines Gewindelochs.

EP 2 361 712 A2 offenbart ein Verfahren zum Erzeugen eines Gewindes mit einem Gewindeerzeugungswerkzeug auf einer numerisch gesteuerten Werkzeugmaschine und eine Werkzeugkoppelvorrichtung zum Koppeln des Gewindeerzeugungswerkzeug an eine Maschinenspindel der Werkzeugmaschine. Um die Arbeitsgeschwindigkeit des Gewindeerzeugens zu erhöhen, sieht die Erfindung vor, dass die Drehgeschwindigkeit des Gewindeerzeugungswerkzeugs mittels eines zwischen Werkzeugspindel und Gewindeerzeugungswerkzeug wirksam angeordneten Übersetzungsgetriebes gegenüber der Drehgeschwindigkeit der Werkzeugspindel ins Schnelle übersetzt wird. Dadurch ist es möglich, bei gegebener Leistungsfähigkeit der Maschinensteuerung hinsichtlich ihrer Synchronisationsfähigkeit kürzere Taktzeiten beim Gewindeerzeugen zu erreichen. So kann auch die Wirtschaftlichkeit des Verfahrens verbessert werden, da an der Synchronisationsgrenze der jeweiligen sich im Einsatz befindlichen Werkzeugmaschinen ohne größeren Aufwand nichts geändert werden kann.

Das Werkzeug gemäß EP 2 361 712 A2 ist in einer Spannzange gespannt und die Spannzange in einer Spannzangenaufnahme aufgenommen. Die Maschinenspindel ist durch Nadellager gegenüber dem Gehäuse drehbar gelagert und innerhalb des Gehäuses mit einem inneren Ring drehfest verbunden, an dessen Umfang über Lagerbolzen drei Zahnräder angeordnet sind. Innenseitig greifen die drei Zahnräder in ein inneres Zahnrad, das drehfest mit der Spannzangenaufnahme gekoppelt ist. Außenseitig greifen die drei Zahnräder in einen Zahnkranz an der Innenseite eines äußeren Ringes, der mit dem Gehäuse verbunden ist und damit nicht drehend ist. Die Zahnräder und der Zahnkranz bilden als Planetengetriebe das Übersetzungsgetriebe und definieren durch ihre Verzahnungen das Übersetzungsverhältnis des Getriebes. Der innere Ring ist an seiner Außenseite über außen umlaufend am inneren Ring angeordnete und oberhalb und unterhalb der Zahnräder, also auf axial entgegengesetzten Seiten des Übersetzungsgetriebes angeordnete Kugellager drehend innerhalb des äußeren Ring gelagert. Die Spannzangenaufnahme durchdringt den inneren Ring und das Übersetzungsgetriebe und endet in einem Endbereich kurz nach dem Übersetzungsgetriebe bzw. dem inneren Ring an der Antriebsseite, also der von der Spannzange oder Werkzeugseite abgewandten Seite. An seiner Innenseite ist der innere Ring über nur an der Antriebseite vorgesehene umlaufende Kugellager auf der Außenseite des Endbereichs der Spannzangenaufnahme gegenüber der Spannzangenaufnahme drehbar gelagert. Die Spannzangenaufnahme ist ferner gegenüber dem Gehäuse durch Kugellager drehbar gelagert, wobei die Kugellager die an der axial vorderen oder Werkzeugseite und die Spannzangenaufnahme beispielsweise in zwei Reihen umlaufend angeordnet sind.

Eine derart aufgebaute Kopplungsvorrichtung wird von der Anmelderin unter der Bezeichnung Speedsynchro^{®} gefertigt und vertrieben (siehe speedsynchro.com). Die Drehzahl der Maschinenspindel entspricht dem Quotienten aus der Drehzahl des Gewindeerzeugungswerkzeuges und dem Übersetzungsverhältnis 4,412, der axiale Vorschub dem Produkt aus der Gewindesteigung und Übersetzungsverhältnis 4,412. Es umfasst einen von der Anmelderin als Softsynchro^{®} bezeichneten axialen Minimallängenausgleich mittels Elastomerelementen, um die bei dem Gewindeprozess, besonders am Umkehrpunkt, auftretenden axialen Kräfte zu kompensieren.

Aus der DE 10 2016 008 478 A1 ist ein Verfahren zum Erzeugen eines Gewindes bekannt, bei dem mit einem Einschuss-Gewindebohr-Werkzeug die Kernlochbohrung und das Innengewinde-Schneiden in einem gemeinsamen Werkzeughub durchgeführt werden. Nach einem Gewindebohr-Hub wird vor dem Reversier-Hub ein Nutform-Hub durchgeführt bei eine an das Innengewinde anschließende Umlaufnut ohne Gewindesteigung gebildet wird, in der das Gewindeprofil des Gewindebohr-Werkzeuges belastungsfrei drehen kann. Das Gewindebohr-Werkzeug wird über die Soll-Gewindetiefe für den Gewindebohr-Hub hinaus bis zum Erreichen einer Soll-Bohrungstiefe bewegt, und zwar mit einem Nutform-Vorschub sowie einer Nutform-Drehzahl, die zueinander nicht synchronisiert sind und unterschiedlich zum Gewindebohr-Vorschub und zur Gewindebohr-Drehzahl sind. Auf diese Weise könne die Gewindebohr-Drehzahl bis auf 0 reduziert werden, ohne dass es aufgrund von übermäßig großer Schneidenbelastung zu einem Werkzeugbruch oder zu einem Ausbrechen des Gewindeprofils kommt.

Aus der WO 2019/238175 A1 ist ein Verfahren zum Erzeugen eines Gewindes bekannt, bei dem ein Werkzeug mit einem Gewindeerzeugungsbereich während einer Arbeitsbewegung in das Werkstück bewegt wird, wobei die Arbeitsbewegung eine Drehbewegung und gemäß der Gewindesteigung mit der Drehbewegung synchronisierte axiale Vorschubbewegung umfasst. In einer an die Arbeitsbewegung anschließenden Abbremsbewegung wird das Werkzeug weiter in das Werkstück in derselben Vorwärtsrichtung und mit gleichbleibendem Drehsinn wie bei der Arbeitsbewegung bis zu einem Umkehrpunkt bewegt. Während der Abbremsbewegung wird die axiale Vorschubbewegung abhängig vom Drehwinkel der Drehbewegung des Werkzeugs gemäß einer vorab gespeicherten eindeutigen Beziehung, insbesondere einer Funktion oder einer Abfolge von Funktionen, zwischen dem axialen Vorschub des Werkzeugs und dem Drehwinkel gesteuert, wobei der axiale Vorschub des Werkzeugs bei einer vollen Umdrehung zumindest während eines Teils der Abbremsbewegung betragsmäßig kleiner als die Gewindesteigung ist und beim Umkehrpunkt Null ist. Während der Abbremsbewegung wird eine Umlaufnut oder ein Freistich in dem Werkstück erzeugt. In einer bevorzugten Ausführungsform werden während der Abbremsbewegung in mehreren aufeinanderfolgenden Abbremsschritten zueinander unterschiedliche Beziehungen, insbesondere Funktionen, zwischen dem axialen Vorschub des Werkzeugs und dem Drehwinkel gewählt oder eingestellt, vorzugsweise lineare Funktionen, wobei insbesondere die Steigung des axialen Vorschubs betragsmäßig von einem Abbremsschritt zu einem darauffolgenden Abbremsschritt abnimmt. Diese Ausführungsform kann besonders einfach implementiert werden, indem für die Arbeitsbewegung eine NC-Steuerung für einen Gewindeprozess, beispielsweise eine G33 Wegbedingung, mit der Gewindesteigung des Gewindes verwendet wird und in den mehreren Abbremsschritten ebenfalls eine, vorzugsweise die gleiche, NC-Steuerung für einen Gewindeprozess, beispielsweise eine G33 Wegbedingung, mit der jeweiligen konstanten Steigung als Gewindesteigungsparameter verwendet wird.

Nach Erreichen des Umkehrpunktes wird gemäß WO 2019/238175 A1 eine Reversierbewegung des Werkzeuges eingeleitet, mit der das Werkzeug aus dem Werkstück bewegt wird, wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst. In einer vorteilhaften Ausführungsform wird die Reversierbewegung in der ersten Reversierphase mit der betragsmäßig gleichen, nur in der Drehrichtung und Vorschubrichtung invertierten vorab gespeicherten eindeutigen Beziehung, insbesondere einer Funktion oder einer Abfolge von Funktionen, zwischen dem axialen Vorschub des Werkzeugs und dem Drehwinkel gesteuert wie in der Abbremsbewegung.

Es kann gemäß WO 2019/238175 A1 auch ein kombiniertes Werkzeug mit einem Bohrbereich verwendet werden, wobei während der Arbeitsbewegung der Bohrbereich des Werkzeugs ein Kernloch in dem Werkstück erzeugt und der Gewindeerzeugungsbereich den Gewindegang in dem Kernloch.

EP 0 378 239 A2 offenbart eine Werkzeugkoppelvorrichtung, die eine Antriebswelle, eine Abtriebswelle, eine Übersetzungseinheit und ein Gehäuse umfasst, wobei die Abtriebswelle ausschließlich in der Antriebswelle drehgelagert ist.

Der Erfindung liegt nun die Aufgabe zugrunde, eine neue Werkzeugkoppelvorrichtung zum Koppeln eines Werkzeugs zur Bearbeitung eines Werkstücks, insbesondere zum Erzeugen eines Gewindes oder Gewindeloches, an einen Antrieb anzugeben. Mit der Werkzeugkoppelvorrichtung soll bevorzugt eine große Rundlaufgenauigkeit, eine hohe Steifigkeit und/oder eine geringe Abhängigkeit von Schwingungen des Gehäuses erreicht werden.

Diese Aufgabe wird gemäß der Erfindung, insbesondere mit den Merkmalen des Patentanspruchs 1, gelöst. Vorteilhafte Ausgestaltungen und Weiterbildungen gemäß der Erfindung ergeben sich insbesondere aus den vom Patentanspruch 1 abhängigen Patentansprüchen.

Die Werkzeugkoppelvorrichtung gemäß der Erfindung umfasst die Merkmale des Patentanspruchs 1.

In einer Ausführungsform ist die Abtriebswelle von dem Gehäuse beabstandet. In einer weiteren Ausführungsform ist die Abtriebswelle von dem Gehäuse derart entkoppelt ist, dass Gehäuseschwingungen nicht direkt von dem Gehäuse in die Abtriebswelle übertragen werden.

In einer vorteilhaften Ausführungsform weist die Abtriebswelle in axialer Richtung zur zentralen Achse gesehen einen Halteabschnitt zum Halten des Werkzeugs oder eines Werkzeughalters für das Werkzeug, einen vorderen Lagerungsabschnitt, einen Koppelabschnitt zum Koppeln an die Übersetzungseinheit und einen hinteren Lagerungsabschnitt sowie vorzugsweise auch einen Endabschnitt auf, wobei der vordere Lagerungsabschnitt, der Koppelabschnitt und der hintere Lagerungsabschnitt innerhalb des Gehäuses angeordnet sind und der Halteabschnitt und ggf. auch zumindest teilweise der Endabschnitt außerhalb des Gehäuses angeordnet ist bzw. sind.

In einer vorteilhaften Ausführungsform ist die Abtriebswelle zumindest teilweise innerhalb eines Hohlraums der Antriebswelle angeordnet oder zumindest teilweise von der Antriebswelle umgeben. In einer Ausführungsform sind bzw. ist die Abtriebswelle und/oder die Antriebswelle zusätzlich oder alternativ entlang der zentralen Achse bevorzugt ausgedehnt. In einer Ausführungsform sind bzw. ist die Abtriebswelle und/oder die Antriebswelle zusätzlich oder alternativ zumindest weitgehend rotationssymmetrisch um die zentrale Achse ausgebildet.

In einer vorteilhaften Ausführungsform ist die Abtriebswelle als einstückiger und/oder zusammenhängender starrer Rotationskörper ausgebildet. In einer vorteilhaften Ausführungsform ist zusätzlich oder alternativ die Antriebswelle insgesamt oder zumindest ihr Trägerabschnitt als einstückiger und/oder zusammenhängender starrer Rotationskörper ausgebildet.

In einer vorteilhaften Ausführungsform erstreckt sich innerhalb der Abtriebswelle ein axial durchgehender zentraler Innenkanal zum Zuführen von Kühl- und/oder Schmiermittel zum Werkzeug , beispielsweise über ein Übergaberohr in dem Adapter und über eine Übergabeeinheit innerhalb der Abtriebswelle an beiden Enden des Innenkanals.

Bei einer vorteilhaften Ausführungsform umfasst die Übersetzungseinheit ein Zahnradgetriebe, insbesondere ein Planetengetriebe, wobei das Zahnradgetriebe ein zentrales Zahnrad, einen äußeren Getriebering, der fest mit dem Gehäuse verbunden ist und eine Innenverzahnung aufweist, sowie ein oder mehrere zwischen dem zentralen Zahnrad und der Innenverzahnung angeordnete Zwischenzahnräder, die jeweils mit ihren Außenverzahnungen in die Außenverzahnung des innere Zahnrades und in die Innenverzahnung am Getriebering eingreifen, wobei das zentrale Zahnrad mit der Abtriebswelle auf deren Kopplungsabschnitt drehfest verbunden ist und vorzugsweise die zentrale Achse die Drehachse des zentralen Zahnrades darstellt, wobei vorzugsweise die Drehachsen der Zwischenzahnräder parallel zur zentralen Achse sind.

Bei einer vorteilhaften Ausführungsform ist jedes Zwischenzahnrad in eine als Ausschnitt in der Antriebswelle, insbesondere dem in dem Trägerabschnitt ausgebildete Radaufnahme eingesetzt, wobei im Falle mehrerer Radaufnahmen in Umfangsrichtung zwischen zwei Radaufnahmen jeweils ein Zwischenabschnitt des Trägerabschnitts liegt und wobei vorzugsweise die axiale Dicke der Radaufnahme(n) im Wesentlichen der axialen Dicke des Getrieberinges entspricht.

In einer vorteilhaften Ausführungsform, bei der jedes Zwischenzahnrad auf einem zugeordneten Achsbolzen drehbar gelagert ist, ist jeder Achsbolzen vorzugsweise an der Stirnseite in den vorderen Lagerungsabschnitt des Trägerabschnitts eingebracht und erstreckt sich durch ein zentrales Lagerloch in dem jeweiligen Zwischenzahnrad durch die zugehörige Radaufnahme bis in den hinteren Lagerungsabschnitt des Trägerabschnitts .

In einer weiteren vorteilhaften Ausführungsform, bei der die Antriebswelle in dem Gehäuse über axial zur zentralen Achse an entgegengesetzten Seiten der Übersetzungseinheit angeordnete vordere Wälzlager und hintere Wälzlager, die jeweils vorzugsweise in unmittelbarer Nähe zur Übersetzungseinheit angeordnet sind, drehgelagert ist, sind insbesondere die vorderen Wälzlager an dem vorderen Lagerungsabschnitt des Trägerabschnitts angeordnet und die hinteren Wälzlager sind an dem hinteren Lagerungsabschnitt des Trägerabschnitts angeordnet.

In einer weiteren vorteilhaften Ausführungsform nach den obigen Ausführungsformen oder einer weiteren Ausführungsform, bei der die Abtriebswelle an oder in der Antriebswelle über axial zur zentralen Achse an entgegengesetzten Seiten der Übersetzungseinheit angeordnete vordere Wälzlager und hintere Wälzlager drehgelagert ist, sind insbesondere die vorderen Wälzlager zwischen dem vorderen Lagerungsabschnitt des Trägerabschnitts und dem vorderen Lagerungsabschnitt der Abtriebswelle angeordnet und die hinteren Wälzlager zwischen dem hinteren Lagerungsabschnitt des Trägerabschnitts und dem hinteren Lagerungsabschnitt der Abtriebswelle angeordnet.

In einer vorteilhaften Ausführungsform überlappen sich die hinteren Wälzlager zwischen Antriebswelle und Gehäuse und die hinteren Wälzlagern zwischen Antriebswelle und Abtriebswelle in einer radialen Projektion auf die zentrale Achse nicht.

In einer weiteren vorteilhaften Ausführungsform beginnen die vorderen Wälzlager zwischen Antriebswelle und Abtriebswelle axial gesehen in unmittelbarer Nähe zur Übersetzungseinheit und erstrecken sich in axialer Richtung zur zentralen Achse über den überwiegenden Teil des vorderen Lagerungsabschnittes des Trägerabschnittes und/oder bis in die Nähe der Stirnseite .

Eine weitere vorteilhafte Ausführungsform umfasst eine Drehfixiereinheit zur Aufnahme der durch die Übersetzungseinheit wirkenden Drehmomente.

Eine ebenfalls vorteilhafte Ausführungsform der Erfindung stellt ein Verfahren zum Erzeugen eines Gewindes oder Gewindeloches in einem Werkstück dar, bei dem
a) ein mit einer Werkzeugkoppelvorrichtung nach einem der vorhergehenden Ansprüche an einen Antrieb gekoppeltes Werkzeug zum Erzeugen eines Gewindes oder Gewindeloches mit einem Gewindeerzeugungsbereich verwendet wird,
b) das Werkzeug in einer Arbeitsbewegung während einer ersten Arbeitsphase in das Werkstück bewegt wird, wobei die Arbeitsbewegung eine Drehbewegung mit einem vorgegebenen Drehsinn um die zentrale Achse und eine gemäß der Gewindesteigung mit der Drehbewegung synchronisierte axiale Vorschubbewegung des Werkzeugs in einer axialen Vorwärtsrichtung axial zur zentralen Achse umfasst, derart, dass einer vollen Umdrehung des Werkzeugs ein axialer Vorschub des Werkzeugs um die vorgegebene Gewindesteigung entspricht, und wobei der Gewindeerzeugungsbereich während der ersten Arbeitsphase in der Arbeitsbewegung einen unter der vorgegebenen Gewindesteigung verlaufenden Gewindegang in dem Werkstück erzeugt,
c) das Werkzeug in einer Abbremsbewegung während einer zweiten Arbeitsphase im Anschluss an die erste Arbeitsphase weiter in das Werkstück bis zu einem Umkehrpunkt bewegt wird, wobei der axiale Vorschub des Werkzeugs bezogen auf eine volle Umdrehung zumindest während eines Teils der Abbremsbewegung, vorzugsweise während der gesamten Abbremsbewegung, betragsmäßig kleiner als die Gewindesteigung ist und beim Umkehrpunkt Null ist und wobei der Gewindeerzeugungsbereich des Werkzeugs während der Abbremsbewegung wenigstens eine, insbesondere geschlossene oder ringförmige, Umfangsnut in dem Werkstück erzeugt,
d) das Übersetzungsverhältnis der Übersetzungseinheit maximal 1:3 beträgt.

In einer vorteilhaften Ausführungsform ist das Übersetzungsverhältnis zwischen 1:3 und 1:10, insbesondere zwischen 1:4 und 1:8, vorzugsweise zwischen 1:4 und 1:5, gewählt.

In einer vorteilhaften Ausführungsform umfasst das Werkzeug ferner wenigstens einen Bohrbereich zum Erzeugen eines Kernloches. Der Bohrbereich ist in einem weiter vorne, insbesondere an einem vorderen oder freien Ende, liegenden Bereich angeordnet als der Gewindeerzeugungsbereich. Bohrbereich und Gewindeerzeugungsbereich sind miteinander starr bewegungsgekoppelt und/oder auf einem gemeinsamen Werkzeugträger oder Werkzeugschaft befestigt oder ausgebildet. Bevorzugt erzeugt während der Arbeitsbewegung der Bohrbereich des Werkzeugs ein Kernloch in dem Werkstück und der Gewindeerzeugungsbereich einen unter der vorgegebenen Gewindesteigung verlaufenden Gewindegang in der Oberfläche dieses Kernloches. Der Gewindeerzeugungsbereich ragt im Allgemeinen radial zur Werkzeugachse weiter nach außen als der Bohrbereich. Dadurch kann das Gewinde ohne radiale Zustellung des Werkzeugs erzeugt werden und der Bohrbereich beim Reversieren ohne Zerstörung des Gewindes durch das Kernloch wieder herausbewegt werden.

Die Werkzeugkoppelvorrichtung gemäß der Erfindung hat sich insbesondere hinsichtlich der Steifigkeit und Rundlaufeigenschaften sowie der Unempfindlichkeit gegenüber Schwingungen des Gehäuses als vorteilhaft erwiesen.

In einer Ausführungsform gemäß der Erfindung kann nun vorgesehen sein, dass
d) während der Arbeitsbewegung die (tatsächliche) Drehzahl der Drehbewegung des Werkzeugs in ihrem zeitlichen Verlauf ein erstes Plateau, bei dem die Drehzahl konstant auf einer vorgegebenen (oder: programmierten oder im Steuerprogramm eingegebenen) maximalen Drehzahl bleibt, durchläuft und
e) während der Abbremsbewegung die (tatsächliche Drehzahl) der Drehbewegung des Werkzeugs in ihrem zeitlichen Verlauf ein zweites Plateau, bei dem die Drehzahl konstant auf derselben vorgegebenen maximalen Drehzahl bleibt, durchläuft,
f) wobei die vorgegebene maximale Drehzahl der Drehbewegung des Werkzeugs mindestens so groß gewählt ist, dass eine Bahngeschwindigkeit am Gewindeerzeugungsbereich von mindestens 57 m/min, insbesondere von mindestens 85 m/min, erreicht wird, was bei einem Gewindedurchmesser von 6 mm einer maximalen Drehzahl von mindestens 3000 U/min, insbesondere mindestens 4.500 U/min, entspricht.

In einer Ausführungsform gemäß der Erfindung ist vorgesehen, dass in der Programmierung des Maschinenantriebs eine maximale Drehzahl der Drehbewegung des Maschinenantriebs programmiert wird, die dem Produkt aus dem Übersetzungsverhältnis und der vorgegebenen maximalen Drehzahl der Drehbewegung am Werkzeug entspricht.

In einer Ausführungsform liegt zwischen dem Zeitintervall des ersten Plateaus der Drehzahl und dem Zeitintervall des zweiten Plateaus der Drehzahl ein Zwischenzeitintervall, in dem die Drehzahl unter die maximale Drehzahl abfällt. Das Verhältnis der Intervalllänge des Zwischenzeitintervalls zur Intervalllänge des Zeitintervalls des zweiten Plateaus liegt in einer Ausführungsform in einem Bereich von 0,5 bis 2,4. Die Intervalllänge des zweiten Plateaus ist in einer Ausführungsform in einem Bereich von 0,01 s bis 0,25 s, insbesondere 0,02 s bis 0,13 s, gewählt und/oder die Intervalllänge des Zwischenzeitintervalls ist in einer Ausführungsform zwischen 0,05 s und 0,15 s, insbesondere zwischen 0,06 und 0,10 s, gewählt. In einer Ausführungsform ist die maximale Drehzahl schon zu Beginn der ersten Arbeitsphase oder der Arbeitsbewegung oder bei dem Eintrittspunkt des Werkezeugs in das Werkstück erreicht. In einer Ausführungsform wird die maximal erreichte Bahngeschwindigkeit am Gewindeerzeugungsbereich in einem Bereich von 57 m/min bis 189 m/min, insbesondere von 85 m/min bis 132 m/min, gewählt.

In einer vorteilhaften Ausführungsform ist das Übersetzungsverhältnis zwischen 1:3 und 1:10 gewählt, insbesondere zwischen 1:4 und 1:8, vorzugsweise zwischen 1:4 und 1:5.

Der Gewindeerzeugungsbereich weist im Allgemeinen ein Wirkprofil auf, das dem Gewindeprofil des zu erzeugenden Gewindes entspricht. In einer Ausführungsform weist der Gewindeerzeugungsbereich, vorzugsweise in einem vorderen Bereich, des Werkzeugs wenigstens einen Gewindezahn auf, vorzugsweise zwei Gewindezähne.

Die Abbremsbewegung umfasst bevorzugt eine Drehbewegung mit gleichbleibendem Drehsinn wie bei der Arbeitsbewegung. In der Regel beginnt der Abbremsvorgang oder die zweite Arbeitsphase bei einem axialen Vorschub, der der Gewindesteigung der ersten Arbeitsphase entspricht. Der Abbremsvorgang ist als Abbremsung von der anfänglichen Gewindesteigung bis auf Null am Ende oder an einem Umkehrpunkt zu verstehen und muss nicht über das gesamte Drehwinkelintervall eine Verringerung des axialen Vorschubs abhängig vom Drehwinkel (Abbremsbeschleunigung), insbesondere auf Werte unterhalb der Gewindesteigung beinhalten. Vielmehr sind auch Drehwinkelintervalle möglich, in denen der axiale Vorschub bezogen auf den Drehwinkel Null ist oder sogar vorübergehend negativ ist, also seine Richtung umkehrt. In einer bevorzugten Ausführungsform wird während der Abbremsbewegung die axiale Vorschubbewegung abhängig vom Drehwinkel der Drehbewegung des Werkzeugs gemäß einer vorab gespeicherten eindeutigen Beziehung, insbesondere einer Funktion oder einer Abfolge von Funktionen, zwischen dem axialen Vorschub des Werkzeugs und dem Drehwinkel gesteuert. Eine Funktion, die die Beziehung zwischen axialem Vorschub (oder: der axialen Eindringtiefe) und dem Drehwinkel definiert, kann einen kontinuierlichen Definitionsbereich und Wertebereich oder auch einen diskreten Definitionsbereich und Wertebereich mit diskreten vorab gespeicherten oder vorab ermittelten Wertepaaren oder Wertetabellen aufweisen. In einer Ausführungsform ist auch die Drehgeschwindigkeit der Drehbewegung beim Umkehrpunkt Null und/oder ist der gesamte oder aufsummierte axiale Vorschub des Werkzeuges während der Abbremsbewegung zwischen dem 0,1-fachen bis 2-fachen der Gewindesteigung gewählt oder eingestellt.

In einer bevorzugten Ausführungsform werden während der Abbremsbewegung in mehreren aufeinanderfolgenden Abbremsschritten zueinander unterschiedliche Beziehungen, insbesondere Funktionen, zwischen dem axialen Vorschub des Werkzeugs und dem Drehwinkel gewählt oder eingestellt. In einer besonders vorteilhaften Ausführungsform ist während mehreren, insbesondere auch allen, Abbremsschritten für die axiale Eindringtiefe oder der axiale Vorschub eine lineare Funktion des Drehwinkels gewählt und/oder ist die (programmierte) Steigung, d.h. die Ableitung der axialen Eindringtiefe oder des axialen Vorschubs nach dem Drehwinkel, in jedem dieser Abbremsschritte konstant und nimmt betragsmäßig von einem Abbremsschritt zu einem darauffolgenden Abbremsschritt ab. Diese Ausführungsform kann besonders einfach implementiert werden, indem für die Arbeitsbewegung eine NC-Steuerung für einen Gewindeprozess, beispielsweise eine G33 Wegbedingung, mit der Gewindesteigung des Gewindes verwendet wird und in den mehreren Abbremsschritten ebenfalls eine, vorzugsweise die gleiche, NC-Steuerung für einen Gewindeprozess, beispielsweise eine G33 Wegbedingung, mit der jeweiligen konstanten Steigung als Gewindesteigungsparameter verwendet wird.

In einer Ausführungsform wird nach Erreichen des Umkehrpunktes eine Reversierbewegung des Werkzeuges eingeleitet, mit der das Werkzeug aus dem Werkstück bewegt wird, wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst. Die Reversierbewegung wird bevorzugt mit einem zur Arbeitsbewegung und Abbremsbewegung symmetrischen Bewegungsverlauf mit umgekehrtem Drehsinn und umgekehrtem Vorschub durchgeführt. In einer vorteilhaften Ausführungsform wird die Reversierbewegung in der ersten Reversierphase mit der betragsmäßig gleichen, nur in der Drehrichtung und Vorschubrichtung invertierten vorab gespeicherten eindeutigen Beziehung, insbesondere einer Funktion oder einer Abfolge von Funktionen, zwischen dem axialen Vorschub des Werkzeugs und dem Drehwinkel gesteuert wie in der Abbremsbewegung während der zweiten Arbeitsphase, ggf. unter Auslassung oder Verkürzung des Egalisisierungsschrittes, sofern vorhanden.

Die Erfindung wird im Folgenden anhand von Ausführungsbeispielen weiter erläutert. Dabei wird auch auf die Zeichnung Bezug genommen, in deren
- FIG 1: eine Ausführungsform einer Werkzeugkoppeleinheit mit einer Übersetzungseinheit zum Koppeln eines kombinierten Bohr- und Gewindeerzeugungswerkzeuges mit einer Antriebseinheit in einem Längsschnitt,
- FIG 2: die Ausführungsform gemäß FIG 1 in einem Querschnitt und
- FIG 3: die Ausführungsform gemäß FIG 1 und 2 in einer perspektivischen Ansicht
jeweils schematisch dargestellt sind. Einander entsprechende Teile und Größen sind in den FIG 1 bis 3 mit denselben Bezugszeichen versehen.

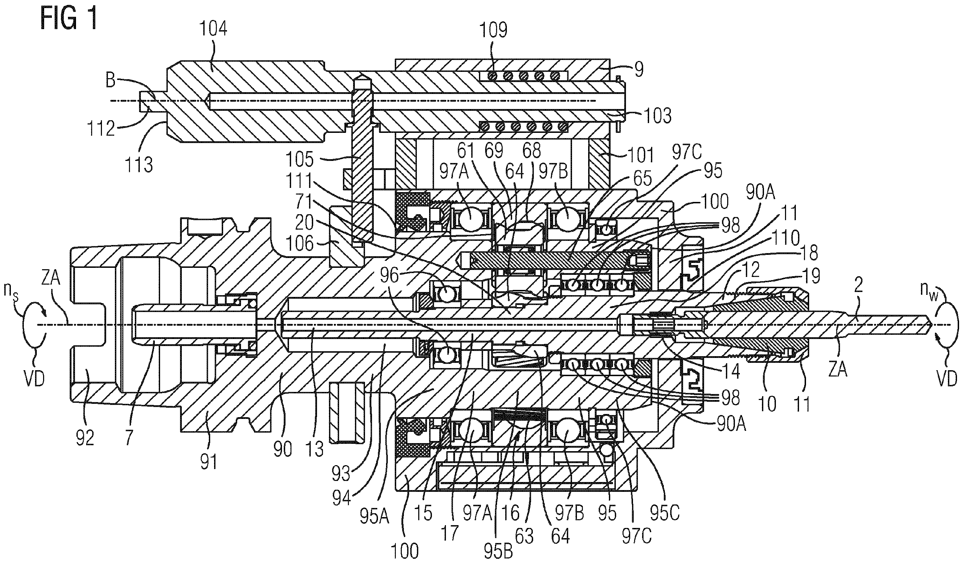

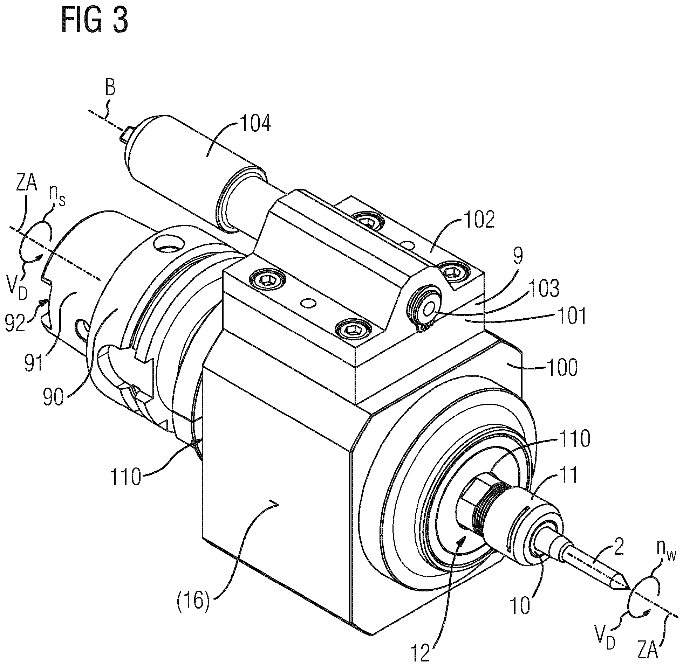

In den FIG 1 bis 3 ist eine Werkzeugkoppelvorrichtung gemäß der Erfindung gezeigt. Die Werkzeugkoppelvorrichtung ist zum Ankoppeln eines Werkzeugs 2 zum Bearbeiten eines Werkstücks, insbesondere zum Erzeugen eines Gewindes oder eines Gewindeloches in dem Werkstück an eine nicht dargestellte Antriebseinheit (oder kurz: Antrieb), insbesondere an eine Maschinenspindel einer Werkzeugmaschine, vorgesehen. Die Werkzeugkoppelvorrichtung umfasst eine mit dem Werkzeug 2 drehgekoppelte oder drehkoppelbare Abtriebswelle (oder: Werkzeugschaft, Spannkopf) 12, ein Gehäuse 100, eine mit der Antriebseinheit drehgekoppelte oder drehkoppelbare Antriebswelle (oder: Maschinenschaft) 90 sowie eine Übersetzungseinheit 16 zwischen Antriebswelle 90 und Abtriebswelle 12 zum Übersetzen einer Drehbewegung der Antriebswelle 90 in eine Drehbewegung der Abtriebswelle 12. Das Werkzeug 2 ist in einer Spannzange 10 gehalten, die wiederum in einem an einem Endbereich ausgebildeten Spannabschnitt (oder: Spannzangenaufnahme) 19 der Abtriebswelle 12 gehalten ist. Zum Halten des Werkzeugs 2 ist die Spannzange 10 mittels einer auf einem Gewinde der Abtriebswelle 12 aufgeschraubten Spannmutter 11 nach innen zusammengedrückt oder gespannt. Anstelle einer Spannzange 10 kann natürlich auch ein anderes Haltemittel, beispielsweise ein Schnellwechseleinsatz oder Schrumpffutter, vorgesehen sein.

Die Abtriebswelle 12 erstreckt sich im Anschluss an ihren Spannabschnitt 19 weiter durch eine Öffnung 110 des Gehäuses 100 in das Gehäuse 100 hinein, wobei von der Öffnung 110 nach innen in axialer Richtung zur zentralen Achse ZA gesehen ein vorderer Lagerabschnitt 18, ein Koppelabschnitt 20 und ein hinterer Lagerabschnitt 15 sowie schließlich ein Endabschnitt 8 der Abtriebswelle 12 hintereinander angeordnet sind. Der Endabschnitt 8 der Abtriebswelle 12 ist zentral durch eine von der Öffnung 110 abgewandte weitere Öffnung 111 des Gehäuses nach außen geführt. Die Antriebswelle 90 umfasst einen Adapter 91 mit einem Aufnahmeraum 92 zum Aufnehmen und Ankoppeln einer nicht dargestellten Maschinenspindel oder Welle einer Werkzeugmaschine oder eines anderen Antriebs. Der Adapter 91 kann an verschiedene Formen der Maschinenspindel angepasst werden.

Die Antriebswelle 90 weist im Anschluss an den Adapter 91 einen Hohlschaft 93 auf, der einen zentralen Hohlraum 94 umschließt, der die Abtriebswelle 12 insbesondere den Endabschnitt 8 und die weiteren Abschnitte der Abtriebswelle 12 außer dem Spannabschnitt 19 aufnimmt. Der Hohlschaft 93 der Antriebswelle 90 erstreckt sich durch die weitere Öffnung 111 des Gehäuses 100 in das Gehäuse 100 hinein und verläuft in einem Trägerabschnitt (oder Radträger) 95 innerhalb des Gehäuses 100 bis zu einer Stirnseite 90A der Antriebswelle 90 bzw. deren Trägerabschnitts 95 kurz vor der Öffnung 110 des Gehäuses 100. Der Trägerabschnitt 95 setzt sich im Anschluss axial zur zentralen Achse ZA gesehen aus einem hinteren Lagerungsabschnitt 95A, mehreren, insbesondere drei, Zwischenabschnitten 95B und wenigstens einem vorderen Lagerungsabschnitt 95C zusammen. Der vordere Lagerungsabschnitt 95C bildet den Endbereich der Antriebswelle 90 und erstreckt sich nach vorne bis kurz vor die stirnseitige Gehäusewand des Gehäuses 100 mit der Öffnung 110.

Auch die Antriebswelle 90 ist vorzugsweise als zusammenhängender oder einstückiger Körper ausgebildet, um eine möglichst starre Ausbildung ohne Verbindungs- oder Fügetoleranzen zu ermöglichen. Die Antriebswelle 90 kann aber auch mehrteilig ausgebildet sein, beispielsweise mit einem austauschbaren Adapter 91 zur einfachen Anpassung an verschiedene Maschinenspindeln.

Die Abtriebswelle 12 und/oder die Antriebswelle 90 und/oder die Spannzange 10 sind vorzugsweise entlang der zentralen Achse ZA bevorzugt ausgedehnt und erstrecken sich entlang der Achse ZA und sind bevorzugt weitgehend rotationssymmetrisch um die zentrale Achse ZA ausgebildet.

Innerhalb der Abtriebswelle 12 erstreckt sich ein axial durchgehender zentraler Innenkanal 13 zum Zuführen von Kühl- und/oder Schmiermittel zum Werkzeug 2, beispielsweise über ein Übergaberohr 7 in dem Aufnahmeraum 92 und über eine Übergabeeinheit 14 innerhalb der Abtriebswelle 12 an beiden Enden des Innenkanals 13. Die Abtriebswelle 12 ist vorzugsweise als zusammenhängender oder einstückiger Körper ausgebildet, um eine möglichst starre Ausbildung ohne Verbindungtoleranzen zu ermöglichen.

Die beiden Öffnungen 110 und 111 im Gehäuse 100 sind durch nicht näher bezeichnete Dichtungen um die Antriebswelle 12 bzw. Abtriebswelle 90 abgedichtet.

Die Abtriebswelle 12 zusammen mit dem daran über die Spannzange 10 mitdrehend oder drehfest gehaltenen Werkzeug 2 und ebenso die Antriebswelle 90 sind jeweils um eine zentrale Achse ZA in einer Vorwärtsdrehrichtung V_{D} (oder in einer nicht dargestellten Rückwärtsdrehrichtung) drehbar. Die mit der Maschinenspindel drehfest gekoppelte Antriebswelle 90 dreht mit der Antriebsdrehzahl oder Maschinendrehzahl oder Spindeldrehzahl n_{S} der Maschinenspindel und die Abtriebswelle 12 zusammen mit dem daran über die Spannzange 10 drehfest gehaltenen Werkzeug 2 dreht mit der Abtriebsdrehzahl oder Werkzeugdrehzahl n_{W} jeweils um die zentrale Achse ZA.

Zwischen die Antriebswelle 90 und die Abtriebswelle 12 ist nun die Übersetzungseinheit 16 geschaltet, die innerhalb des Gehäuses 100 angeordnet ist. Die Übersetzungseinheit 16 übersetzt, bei vorzugsweise gleicher Drehrichtung, die Spindel- oder Antriebsdrehzahl n_{S} in die Werkzeug- oder Abtriebsdrehzahl nw gemäß dem Übersetzungsverhältnis I = n_{S} / n_{W} der Übersetzungseinheit 16. In einer Ausführungsform ist das Übersetzungsverhältnis I zwischen 1:3 und 1:10 gewählt, insbesondere zwischen 1:4 und 1:8, vorzugsweise zwischen 1:4 und 1:5.

Im dargestellten Ausführungsbeispiel ist die Übersetzungseinheit 16 mit einem Zahnradgetriebe, insbesondere einem Planetengetriebe (oder Umlaufgetriebe), ausgebildet. Das Getriebe der Übersetzungseinheit 16 umfasst ein zentrales Zahnrad ("Sonnenrad") 64, einen äußeren Getriebering (oder: Hohlrad, Ringkörper) 69, der fest am Gehäuse 100 angeordnet oder mit dem Gehäuse 100 verbunden ist, mit einer Innenverzahnung 68 sowie zwischen dem Zahnrad 64 und der Innenverzahnung 68 angeordnete Zwischenzahnräder (oder "Planetenräder", Umlaufräder), beispielsweise drei Zwischenzahnräder 61, 62 und 63. Die Zwischenzahnräder 61, 62 und 63 greifen jeweils mit ihren Außenverzahnungen in die Außenverzahnung des innere Zahnrades 64 und in die Innenverzahnung 68 am Getriebering 69 am Gehäuse 100 ein. Das zentrale Zahnrad 64 ist in einem axial gesehen mittleren Bereich des Gehäuses 100 angeordnet und mit der Abtriebswelle 12 auf deren Kopplungsabschnitt 20 drehfest oder mitdrehend verbunden. Die Verzahnungen der Zahnräder 61 bis 64 und die Innenverzahnung 68 des Getriebes legen das Übersetzungsverhältnis I der Übersetzungseinheit 16 fest.

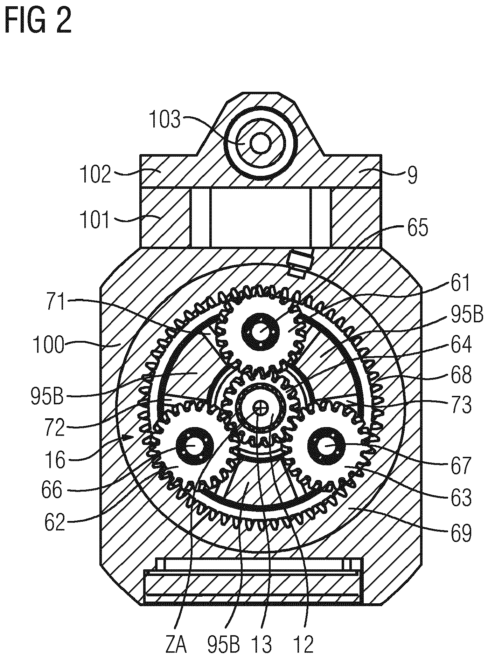

Die Planetenräder oder Zwischenzahnräder 61 und 62 und 63 sind an dem als Radträger vorgesehenen Trägerabschnitt 95 der Antriebswelle 90 vorzugsweise wie folgt angebracht. Die Zwischenzahnräder 61, 62 und 63 sind in zugehörige in Umfangsrichtung voneinander beabstandet angeordnete Ausschnitte oder Radaufnahmen 71, 72 und 73 in dem Trägerabschnitt 95 eingebracht und über zugeordnete Achsbolzen 65, 66 und 67 drehbar befestigt und gelagert. Die Radaufnahmen 71, 72 und 73 liegen, wie am Beste in FIG 2 zu erkennen ist, in Umfangsrichtung zwischen den Zwischenabschnitten 95B des Trägerabschnitts 95 und in zur zentralen Achse ZA axialer Richtung zwischen dem hinteren Lagerungsabschnitt 95A und dem vorderen Lagerungsabschnitt 95C.

Die axiale Dicke der Radaufnahmen 71 bis 73 entspricht im Wesentlichen der axialen Dicke des Getrieberinges 69.

Die Achsbolzen 65, 66 und 67 zur Drehlagerung der Zwischenzahnräder 61, 62 und 63 sind vorzugsweise von der Stirnseite 90A in den Trägerabschnitt 95 eingebracht und erstrecken sich durch ein zentrales Lagerloch in dem jeweiligen Zwischenzahnrad 61, 62 und 63 durch die zugehörige Radaufnahme 71, 72 und 73 bis in den hinteren Lagerungsabschnitt 95A und sind dort, beispielsweise über Gewinde, fixiert. Die durch die Achsbolzen 65, 66 und 67 festgelegten Drehachsen der Zahnräder 61, 62 und 63 sind vorzugsweise parallel zur zentralen Achse ZA, die die Drehachse der Abtriebswelle 12 und des zentralen Zahnrades 64 sowie auch vorzugsweise der Antriebswelle 90 darstellt. Vorzugsweise sind die Achsbolzen 65, 66 und 67 nicht mit den Zahnrädern drehfest verbunden, sondern dienen vielmehr als Drehlager, auf und gegenüber denen sich die zugehörigen Zahnräder 61, 62 und 63 drehen. Es kann dadurch ein kleiner Bauraum für das Getriebe erreicht werden

Der Trägerabschnitt 95 des Hohlschaftes 93 bildet also den mit dem Antrieb drehenden "Steg" des Planetengetriebes. In der dargestellte bevorzugten Ausführungsform des Planetengetriebes ist somit das Hohlrad 69 des Planetengetriebes drehfest mit dem Gehäuse 100 verbunden, der Steg 95 drehend mit der Antriebswelle 90 verbunden und das Sonnenrad 64 drehend mit der Abtriebswelle 12 verbunden.

In einer ersten Abwandlung des Planetengetriebes kann auch der Steg des Planetengetriebes drehfest mit dem Gehäuse verbunden sein, das Hohlrad mit der Antriebswelle drehend verbunden sein und das Sonnenrad drehend mit der Abtriebswelle 12 verbunden sein. In einer zweiten Abwandlung dieses Planetengetriebes kann auch das Hohlrad mit der Antriebswelle drehend verbunden sein, der Steg des Planetengetriebes drehend mit der Antriebswelle und fest mit dem Gehäuse verbunden sein und das Sonnenrad drehend mit der Abtriebswelle 12 verbunden sein. Außerdem kann statt eines solchen Planetengetriebes auch ein anderes Getriebe für die Übersetzungseinheit 16 vorgesehen sein, beispielsweise ein Reibgetriebe oder anderes Zahnradgetriebe.

Die Übersetzungseinheit 16 hat vorzugsweise eine in etwa ringförmige Grundgestalt oder Kontur und/oder weist axial zur zentralen Achse gesehen eine weitgehend konstante axiale Dicke auf, die in der dargestellten Ausführung der axialen Dicke des Getrieberinges 69 entspricht.

Die Antriebswelle 90 ist über vordere Wälzlager 97B und hintere Wälzlager 97A an beiden Seiten der Übersetzungseinheit 16 in oder an dem Gehäuse 100 an dessen Innenseite um die zentrale Achse ZA drehgelagert.

In ihrem hinteren Lagerungsabschnitt 95A ist die Antriebswelle 90 mittels den die zentrale Achse ZA in einem konstanten Radius umlaufenden hinteren Wälzlagern 97A an der Innenseite des Gehäuses 100 drehgelagert und in ihrem vorderen Lagerungsabschnitt 95C mittels die zentrale Achse ZA in einem konstanten Radius, vorzugsweise dem gleichen Radius wie die Wälzlager 97A, umlaufenden vorderen Wälzlager 97B an der Innenseite des Gehäuses 100 drehgelagert. Die Wälzlager 97A und 97B sind axial gesehen in unmittelbarer Nähe oder unmittelbar anschließend vor und hinter der Übersetzungseinheit 16 angeordnet. Vorzugsweise sind die Wälzlager 97A und 97B jeweils mit einer einzigen Reihe mit tragfähigen großen Lagerkugeln gebildet. Es können aber auch mehrere Reihen von Lagerkugeln vorgesehen sein oder auch Rollenlager.

Weiter vorne ist noch ein Sensorwälzlager 97C mit kleineren Lagerkugeln angeordnet, das einen Magneten und magnetischen Sensor für die Erfassung der Anzahl der erzeugten Gewinde umfassen kann, wie z.B. in DE 102018121315 A1 beschrieben ist.

Die Abtriebswelle 12 ist nun ausschließlich in oder an der Antriebswelle 90 über vordere Wälzlager 98 und hintere Wälzlager 96 an beiden Seiten der Übersetzungseinheit 16 um die zentrale Achse ZA drehgelagert, damit also nicht an oder in dem Gehäuse 100 drehgelagert. Dadurch wird die Übertragung von Schwingungen des Gehäuses 100 auf die Abtriebswelle 12 und damit das Werkzeug 2 vermieden oder zumindest deutlich verringert.

Als Vorteile dieser Lagerung der Abtriebswelle 12 über die Lager 96 und 98 direkt in der Antriebswelle 90 kann man beispielsweise nennen:
▪ Verbesserter Rundlauf, da nur eine Schnittstelle
▪ Bei der Bearbeitung keine Positionsabweichungen des Werkzeuges durch die Gehäuseschwingung
▪ Positionsabweichung unabhängig von der Bearbeitungsdrehzahl (Frequenz- und Amplitudenhöhe)
▪ Verbesserte radiale Steifigkeit

Die hinteren Wälzlager 96 sind zwischen dem hinteren Lagerungsabschnitt 15 der Abtriebswelle 12 und dem hinteren Lagerungsabschnitt 95A des Trägerabschnitt 95 der Antriebswelle 90 und die zentrale Achse ZA in einem konstanten Radius umlaufend angeordnet.

Die hinteren Wälzlager 96 zwischen Abtriebswelle 12 und Antriebswelle 90 sind bevorzugt in zur zentralen Achse ZA axialen Richtung weiter von der Übersetzungseinheit 16 beabstandet als die hinteren Wälzlager 97A zwischen Antriebswelle 90 und Gehäuse 100.

Vorzugsweise überlappen sich die hinteren Wälzlager 97A und die hinteren Wälzlagern 96 in einer gedachten radialen Projektion auf die zentrale Achse ZA nicht, d.h. sie sind in axialer Richtung zur zentralen Achse ZA gesehen axial versetzt. Insbesondere liegen die hinteren Wälzlager 97A axial zwischen den hinteren Wälzlagern 96 und der Übersetzungseinheit 16. Dadurch werden die radial wirkenden Kräfte besser axial verteilt und die Schwingungen des Getriebes können durch die einteilige und massive Ausführung der Antriebwelle 90 unterbunden werden.

Vorzugsweise weisen die hinteren Wälzlager 96 eine einzige Reihe von Lagerkugeln auf, die insbesondere kleiner sind als die Lagerkugeln der Wälzlager 97A, sie können aber auch mehrere Reihen von Lagerkugeln aufweisen. Es sind aber auch Rollenlager möglich.

Die vorderen Wälzlager 98 sind zwischen dem vorderen Lagerungsabschnitt 18 der Abtriebswelle 12 und dem vorderen Lagerungsabschnitt 95C des Trägerabschnitt 95 der Antriebswelle 90 angeordnet und umlaufen die zentrale Achse ZA in einem konstanten Radius, wobei dieser Radius auch etwas größer als der Radius der hinteren Wälzlager 96 sein kann, damit das Lager gut montiert werden kann. Die Lager 98 werden vorzugsweise im Rahmen der Baumaße so groß wie möglich gewählt, um eine hohe axiale und radiale Steifigkeit zu erreichen.

Die vorderen Wälzlager 98 zur Drehlagerung der Abtriebswelle 12 in der Antriebswelle 90 sind axial gesehen in unmittelbarer Nähe vor der Übersetzungseinheit 16 angeordnet und erstrecken sich in axialer Richtung zur zentralen Achse ZA über den überwiegenden Teil, insbesondere mindestens 60 bis 80 %, des vorderen Lagerungsabschnittes 95C des Trägerabschnittes 95 der Antriebswelle 90 bis in die Nähe der Stirnseite 90A. Dadurch wird eine starre und stabile Drehlagerung der vorderen Lagerungsabschnitte 18 und 95C aneinander erreicht.

Bevorzugt umfassen die vorderen Wälzlager 98 mehrere, insbesondere wie dargestellt drei, axial hintereinander angeordnete Reihen von Lagerkugeln, die insbesondere kleiner sind als die Lagerkugeln der hinteren Wälzlager 97A. Die einzelnen Reihen der Lagerkugeln können alternierend auf Druck und Zug übertragen und/oder als Paket gegeneinander verspannt sind. Vorzugsweise sind die Wälzlager 98 auch (teilweise) Axiallager, um die axialen Kräfte des bevorzugten Prozesses aufzunehmen.

Die vorderen Wälzlager 98 können aber auch nur eine oder zwei Reihen von Lagerkugeln aufweisen. In diesem Fall wäre dann vorzugsweise die anderen Wälzlager 96 als Axiallager ausgebildet. Es sind auch wieder Rollenlager als Lager 98 möglich, vorzugsweise Kegelrollenlager, um Axialkräfte aufzunehmen.

Die vorderen Wälzlager 97B zwischen vorderem Lagerungsabschnitt 95C des Trägerabschnitts 95 der Antriebswelle 90 und dem Gehäuse 100 einerseits und die vorderen Wälzlager 98 zwischen vorderem Lagerungsabschnitt 95C des Trägerabschnitts 95 der Antriebswelle 90 und vorderem Lagerungsabschnitt 18 der Abtriebswelle 12 andererseits überlappen sich vorzugsweise in einer gedachten radialen Projektion auf die zentrale Achse ZA teilweise, um einen kompakten Aufbau zu ermöglichen.

Vorzugsweise weist die Abtriebswelle 12, von der Öffnung 110 des Gehäuses 100 nach hinten betrachtet, über ihre gesamte axiale Länge vom vorderen Lagerungsabschnitt 18 bis zum Endabschnitt 8 einen Außendurchmesser auf, der kleiner ist als der jeweilige Innendurchmesser des Hohlschaftes 93 der Antriebswelle 90, wobei die Wälzlager 96 und 98 zwischen der Außenfläche der Abtriebswelle 12 und der Innenfläche des Hohlschaftes 93 der Antriebswelle 90 angeordnet sind. Die Abtriebswelle 12 ist, mit anderen Worten radial gesehen innerhalb der Antriebswelle 90 angeordnet oder von dieser umgeben.

Durch die beschriebene Lagerung der Antriebswelle 90 und der Abtriebswelle 12 wird ein sehr starrer und stabiler Aufbau mit ausgezeichneten Rundlaufeigenschaften erreicht. Während in dem eingangs erwähnten bisherigen S7^{®}-Futter mehrere Schnittstellen oder Bezugsebenen vorhanden sind, wird mit der vorliegenden Modifikation gemäß der Erfindung eine höhere Systemsteifigkeit und dadurch hinsichtlich der Toleranzen und des Rundlaufs eine höhere Genauigkeit erreicht, was gerade für die Erzeugung und Positionierung von Bohrungen, Kernlöchern und Gewindelöchern vorteilhaft ist. Der Spannkopf oder die Abtriebswelle 12 ist als vorzugsweise durchgehender und an beiden Seiten aus dem Gehäuse 100 hervorstehender Rotationskörper in der vorzugsweise ebenfalls als durchgehender und noch im Gehäuse endender Rotationskörper Antriebswelle 90 (oder: Schaft) gelagert jedoch nicht mehr im Gehäuse 100. Dadurch ist nur noch eine Schnittstelle oder eine Bezugsebene vorhanden und Gehäuseschwingungen haben kaum noch Einfluss auf den Spannkopf 12 und das Werkzeug 2. Die Achsbolzen zur Drehlagerung der Planetenräder des Planetengetriebes der Übersetzungseinheit 16 sind von der Stirnseite 90A der Antriebswelle 90 eingeführt und befestigt.

Um die durch das Getriebe der Übersetzungseinheit 16 aufgrund von *actio* = *reactio* auftretenden Drehmomente aufzunehmen, ist als Drehmomentfixierung die in FIG 1 bis 3 oben dargestellte und mit dem Gehäuse 100 fest verbundene Drehfixiereinheit 9 vorgesehen. Die Drehfixiereinheit 9 umfasst in einer entlang einer zur zentralen Achse ZA parallelen Achse B axialen Anordnung einen Fixierbolzen 103, der in einem Führungsteil geführt ist, und ein Anschlussteil 104 zum Anschluss an ein festes nicht mitdrehendes Bezugssystem z.B. ein Maschinengestell oder Maschinengehäuse. Im dargestellten nicht angeschlossenen Zustand ist das Anschlussteil 104 frei und durch eine Feder 109, die sich an dem mit dem Gehäuse 100 verbundenen Führungsteil 118 abstützt, entlang der Achse B nach vorne gedrücktDadurch rastet ein Arretierelement 105 in eine Arretieraufnahme (Arretiernut) in einem Außenring 106 außen an dem Hohlschaft 93 an der Antriebswelle 90 ein.

Ein Vorsprung 112 und eine Anschlagsfläche 113 dienen der Verbindung. Im nicht dargestellten angeschlossenen Zustand wird dagegen das Anschlussteil 104 entlang der Achse B nach hinten gegen die Feder 109 gedrückt und das Arretierelement 105 aus der Arretieraufnahme des Außenelements 106 bewegt und die Einheit wird dadurch betriebsbereit. Ein Vorsprung

Die Ausführungsformen der Werkzeugkoppelvorrichtung gemäß der Erfindung sind bevorzugt für ein Gewindeerzeugungswerkzeug oder Gewindelocherzeugungswerkzeug und ein Verfahren zur Erzeugung eines Gewindes oder eines Gewindeloches vorgesehen, welche bei der Anmelderin unter der Bezeichnung Taptor^{®} geführt wird oder insbesondere aus der eingangs genannten WO 2019/238175 A1 bekannt ist, oder auch für das im allgemeinen Teil beschriebene Verfahren, können aber auch unabhängig davon für ein anderes rotierendes Werkzeug oder Verfahren verwendet werden, beispielsweise zum ausschließlichen Bohren.

Im Unterschied zu dem aus der eingangs erwähnten EP 2 361 712 A1 bekannten Futter oder dem eingangs beschriebenen Speedsynchro^{®}-Futter der Anmelderin ist zum Erreichen einer vollständig starren Kopplung auch kein Minimallängenausgleich mittels Elastomeren realisiert.

### Bezugszeichenliste

- 2: Werkzeug
- 7: Übergaberohr
- 8: Endabschnitt
- 9: Drehfixiereinheit
- 10: Spannzange
- 11: Spannmutter
- 12: Abtriebswelle (Spannkopf)
- 13: Innenkanal
- 14: Übergabeeinheit
- 15: hinterer Lagerungsabschnitt
- 16: Übersetzungseinheit
- 18: vorderer Lagerungsabschnitt
- 19: Spannabschnitt
- 20: Koppelabschnitt
- 61, 62, 63: Zwischenzahnrad
- 64: zentrales Zahnrad
- 65, 66, 67: Achsbolzen
- 68: Innenverzahnung
- 69: Getriebering
- 71, 72, 73: Radaufnahme
- 90: Antriebswelle
- 90A: Stirnseite
- 91: Adapter
- 92: Aufnahmeraum
- 93: Hohlschaft
- 94: Hohlraum
- 95: Trägerabschnitt
- 95A: hinterer Lagerungsabschnitt
- 95B: Zwischenabschnitt
- 95C: vorderer Lagerungsabschnitt
- 96: hintere Wälzlager
- 97A: hintere Wälzlager
- 97B: vordere Wälzlager
- 97C: Sensorwälzlager
- 98: vordere Wälzlager
- 100: Gehäuse
- 101: Seitengehäuse
- 102: Haube
- 103: Fixierbolzen
- 104: Anschlussteil
- 105: Arretierelement
- 106: Außenelement
- 109: Feder
- 110: erste Öffnung
- 111: zweite Öffnung
- 112: Vorsprung
- 113: Anschlagsfläche

- B: Achse
- n_{S}: Drehzahl Spindel (Antriebsdrehzahl)
- n_{W}: Drehzahl Werkzeug (Abtriebsdrehzahl)
- VD: Vorwärtsdrehsinn
- ZA: zentrale Achse

## Patentansprüche

1. Werkzeugkoppelvorrichtung zum Koppeln eines Werkzeugs, insbesondere eines Werkzeugs zum Erzeugen eines Gewindes oder eines Gewindelochs, an einen Antrieb, insbesondere einen Antrieb einer Werkzeugmaschine, umfassend
a) eine Antriebswelle (90) zum Koppeln an den Antrieb,
b) eine Abtriebswelle (12) zum Koppeln an das Werkzeug (2), wobei die Abtriebswelle (12) um eine zentrale Achse (A) dreht oder drehbar ist,
c) eine Übersetzungseinheit (16), die zwischen Antriebswelle (90) und Abtriebswelle (12) geschaltet ist und gemäß einem Übersetzungsverhältnis eine Drehbewegung der Antriebswelle (90) mit einer Antriebsdrehzahl (n_{S}) in eine Drehbewegung der Abtriebswelle (12) mit einer Abtriebsdrehzahl (n_{W}), die größer als die Antriebsdrehzahl (n_{S}) ist, übersetzt, und
d) ein nicht mitdrehendes Gehäuse (100),
e) wobei die Übersetzungseinheit (16) und zumindest ein mit der Übersetzungseinheit (16) gekoppelter Teil (95, 95A, 95B, 95C) der Antriebswelle (90) sowie ein mit der Übersetzungseinheit (16) gekoppelter Teil (18, 20, 15) der Abtriebswelle (12) innerhalb des Gehäuses (100) angeordnet sind,
f) wobei die Antriebswelle (90) an oder in dem Gehäuse (100) drehgelagert ist und
g) wobei die Abtriebswelle (12) ausschließlich an oder in der Antriebswelle (90) drehgelagert ist und nicht an oder in dem Gehäuse (100) drehgelagert ist,
h) bei der die Antriebswelle (90) in axialer Richtung zur zentralen Achse (ZA) gesehen einen Adapter (91) zum Ankoppeln an den Antrieb und einen Trägerabschnitt (95) aufweist, wobei der Trägerabschnitt (95) einen hinterer Lagerungsabschnitt (95A), wenigstens einen Zwischenabschnitt (95B) zum Koppeln der Übersetzungseinheit (16) und einen vorderen Lagerungsabschnitt (95C), der an einer Stirnseite (95A) endet, aufweist, wobei der vordere Lagerungsabschnitt (95C) und seine Stirnseite (95A), jeder Zwischenabschnitt (95B) und der hintere Lagerungsabschnitt (95A) innerhalb des Gehäuses (100) angeordnet sind und der Adapter (91) außerhalb des Gehäuses (100) angeordnet ist,
i) wobei das Gehäuse (100) eine erste Öffnung (110) zum abgedichteten Durchführen der Abtriebswelle (12) aufweist und eine zweite Öffnung (111) zum abgedichteten Durchführen der Antriebswelle (90) und auch der Abtriebswelle (12) aufweist und die zentrale Achse (ZA) durch die erste Öffnung (110) und auch die zweite Öffnung (111) verläuft,
j) wobei die erste Öffnung (110) in einer stirnseitigen Gehäusewand des Gehäuses (100) ausgebildet ist und
k) wobei der vordere Lagerungsabschnitt (95C) der Antriebswelle (90) sich nach vorne bis kurz vor die stirnseitige Gehäusewand erstreckt und mit der Stirnseite (90A) der stirnseitigen Gehäusewand gegenüberliegt.

2. Werkzeugkoppelvorrichtung nach Anspruch 1, bei der die Abtriebswelle (12) von dem Gehäuse (100) beabstandet ist und/oder von dem Gehäuse (100) derart entkoppelt ist, dass Gehäuseschwingungen nicht direkt von dem Gehäuse (100) in die Abtriebswelle (12) übertragen werden.

3. Werkzeugkoppelvorrichtung nach Anspruch 1 oder Anspruch 2, bei der die Abtriebswelle (12) in axialer Richtung zur zentralen Achse (ZA) gesehen einen Halteabschnitt (19) zum Halten des Werkzeugs (2) oder eines Werkzeughalters (10) für das Werkzeug, einen vorderen Lagerungsabschnitt (18), einen Koppelabschnitt (20) zum Koppeln an die Übersetzungseinheit (16) und einen hinteren Lagerungsabschnitt (15) sowie vorzugsweise auch einen Endabschnitt (8) aufweist, wobei der vordere Lagerungsabschnitt (18), der Koppelabschnitt (20) und der hintere Lagerungsabschnitt (15) innerhalb des Gehäuses (100) angeordnet sind und der Halteabschnitt (19) und ggf. auch zumindest teilweise der Endabschnitt (8) außerhalb des Gehäuses (100) angeordnet ist bzw. sind.

4. Werkzeugkoppelvorrichtung nach einem der vorhergehenden Ansprüche, bei der die Abtriebswelle (12) zumindest teilweise innerhalb eines Hohlraums (94) der Antriebswelle (90) angeordnet ist oder zumindest teilweise von der Antriebswelle (90) umgeben ist und/oder bei der die Abtriebswelle (12) und/oder die Antriebswelle (90) entlang der zentralen Achse (ZA) bevorzugt ausgedehnt und/oder zumindest weitgehend rotationssymmetrisch um die zentrale Achse (ZA) ausgebildet sind bzw. ist
und/oder, bei der die Abtriebswelle (12) als einstückiger und/oder zusammenhängender starrer Rotationskörper ausgebildet ist und/oder bei der die Antriebswelle (12) insgesamt oder zumindest ihr Trägerabschnitt (95) als einstückiger und/oder zusammenhängender starrer Rotationskörper ausgebildet ist, und/oder bei der sich innerhalb der Abtriebswelle (12) ein axial durchgehender zentraler Innenkanal (13) zum Zuführen von Kühl- und/oder Schmiermittel zum Werkzeug (2) erstreckt sich, beispielsweise über ein Übergaberohr (7) in dem Adapter (91) und über eine Übergabeeinheit (14) innerhalb der Abtriebswelle (12) an beiden Enden des Innenkanals (13).

5. Werkzeugkoppelvorrichtung nach einem der vorhergehenden Ansprüche, bei der die Übersetzungseinheit (16) ein Zahnradgetriebe, insbesondere ein Planetengetriebe, umfasst, wobei das Zahnradgetriebe ein zentrales Zahnrad (64), einen äußeren Getriebering (69), der fest mit dem Gehäuse (100) verbunden ist und eine Innenverzahnung (68) aufweist, sowie ein oder mehrere zwischen dem zentralen Zahnrad (64) und der Innenverzahnung (68) angeordnete Zwischenzahnräder (61, 62 und 63), die jeweils mit ihren Außenverzahnungen in die Außenverzahnung des innere Zahnrades (64) und in die Innenverzahnung (68) am Getriebering (69) eingreifen, wobei das zentrale Zahnrad (64) mit der Abtriebswelle (12) auf deren Kopplungsabschnitt (20) drehfest verbunden ist und vorzugsweise die zentrale Achse (ZA) die Drehachse des zentralen Zahnrades (64) darstellt,
wobei vorzugsweise die Drehachsen der Zwischenzahnräder (61, 62, 63) parallel zur zentralen Achse (ZA) sind.

6. Werkzeugkoppelvorrichtung nach Anspruch 5, bei der jedes Zwischenzahnrad (61, 62, 63) in eine als Ausschnitt in der Antriebswelle (90), insbesondere dem in dem Trägerabschnitt (95) ausgebildete Radaufnahme (71, 72, 73) eingesetzt ist, wobei im Falle mehrerer Radaufnahmen (71, 72, 73) in Umfangsrichtung zwischen zwei Radaufnahmen jeweils ein Zwischenabschnitt (95B) des Trägerabschnitts (95) liegt und wobei vorzugsweise die axiale Dicke der Radaufnahme(n) (71, 72, 73) im Wesentlichen der axialen Dicke des Getrieberinges (69) entspricht,
und/oder bei der jedes Zwischenzahnrad (61, 62, 63) auf einem zugeordneten Achsbolzen (65, 66, 67) drehbar gelagert ist, wobei jeder Achsbolzen (65, 66, 67) vorzugsweise an der Stirnseite (90A) in den vorderen Lagerungsabschnitt (95C) des Trägerabschnitts (95) eingebracht ist und sich durch ein zentrales Lagerloch in dem jeweiligen Zwischenzahnrad (61, 62, 63) durch die zugehörige Radaufnahme (71, 72, 73) bis in den hinteren Lagerungsabschnitt (95A) des Trägerabschnitts (95) erstreckt.

7. Werkzeugkoppelvorrichtung nach einem der vorhergehenden Ansprüche, bei der die Antriebswelle (90) in dem Gehäuse (100) über axial zur zentralen Achse (ZA) an entgegengesetzten Seiten der Übersetzungseinheit (16) angeordnete vordere Lager, vorzugsweise Wälzlager (97B), und hintere Lager, vorzugsweise Wälzlager (97A), die jeweils vorzugsweise in unmittelbarer Nähe zur Übersetzungseinheit (16) angeordnet sind, drehgelagert ist, wobei insbesondere die vorderen Lager (97B) an dem vorderen Lagerungsabschnitt (95C) des Trägerabschnitts (95) angeordnet sind und die hinteren Lager (97A) an dem hinteren Lagerungsabschnitt (95A) des Trägerabschnitts (95) angeordnet sind.

8. Werkzeugkoppelvorrichtung nach einem der vorhergehenden Ansprüche, und/oder bei der die Abtriebswelle (12) an oder in der Antriebswelle (90) über axial zur zentralen Achse (ZA) an entgegengesetzten Seiten der Übersetzungseinheit (16) angeordnete vordere Lager, vorzugsweise Wälzlager (98), und hintere Lager, vorzugsweise Wälzlager (96), drehgelagert ist, wobei insbesondere die vorderen Lager (98) zwischen dem vorderen Lagerungsabschnitt (95C) des Trägerabschnitts (95) und dem vorderen Lagerungsabschnitt (18) der Abtriebswelle (12) angeordnet sind und die hinteren Lager (96) zwischen dem hinteren Lagerungsabschnitt (95A) des Trägerabschnitts (95) und dem hinteren Lagerungsabschnitt (15) der Abtriebswelle (12) angeordnet sind und/oder wobei die vorderen Lager (98) und/oder die hinteren Lager (96) als Axiallager ausgebildet sind, um Axialkräfte, insbesondere vom Werkzeug (2) oder der Abtriebswelle (12) kommende Axialkräfte, aufzunehmen.

9. Werkzeugkoppelvorrichtung nach Anspruch 7 oder Anspruch 8, bei der sich die hinteren Lager (97A) zwischen Antriebswelle (90) und Gehäuse (100) und die hinteren Lager (96) zwischen Antriebswelle (90) und Abtriebswelle (12) in einer radialen Projektion auf die zentrale Achse (ZA) nicht überlappen und/oder bei der die vorderen Lager (98) zwischen Antriebswelle (90) und Abtriebswelle (12) axial gesehen in unmittelbarer Nähe zur Übersetzungseinheit (16) beginnen und sich in axialer Richtung zur zentralen Achse (ZA) über den überwiegenden Teil des vorderen Lagerungsabschnittes (95C) des Trägerabschnittes (95) und/oder bis in die Nähe der Stirnseite (90A) erstrecken.

10. Werkzeugkoppelvorrichtung nach einem der vorhergehenden Ansprüche mit einer Drehfixiereinheit (9) zur Aufnahme der durch die Übersetzungseinheit (16) wirkenden Drehmomente.

11. Verfahren zum Erzeugen eines Gewindes oder Gewindeloches in einem Werkstück, bei dem
a) ein mit einer Werkzeugkoppelvorrichtung nach einem der vorhergehenden Ansprüche an einen Antrieb gekoppeltes Werkzeug zum Erzeugen eines Gewindes oder Gewindeloches mit einem Gewindeerzeugungsbereich verwendet wird,
b) das Werkzeug in einer Arbeitsbewegung während einer ersten Arbeitsphase in das Werkstück bewegt wird, wobei die Arbeitsbewegung eine Drehbewegung mit einem vorgegebenen Drehsinn (VD) um die zentrale Achse (ZA) und eine gemäß der Gewindesteigung mit der Drehbewegung synchronisierte axiale Vorschubbewegung des Werkzeugs in einer axialen Vorwärtsrichtung axial zur zentralen Achse (ZA) umfasst, derart, dass einer vollen Umdrehung des Werkzeugs ein axialer Vorschub des Werkzeugs um die vorgegebene Gewindesteigung entspricht, und wobei der Gewindeerzeugungsbereich während der ersten Arbeitsphase in der Arbeitsbewegung einen unter der vorgegebenen Gewindesteigung verlaufenden Gewindegang in dem Werkstück erzeugt,
c) das Werkzeug in einer Abbremsbewegung während einer zweiten Arbeitsphase im Anschluss an die erste Arbeitsphase weiter in das Werkstück bis zu einem Umkehrpunkt bewegt wird, wobei der axiale Vorschub des Werkzeugs bezogen auf eine volle Umdrehung zumindest während eines Teils der Abbremsbewegung, vorzugsweise während der gesamten Abbremsbewegung, betragsmäßig kleiner als die Gewindesteigung ist und beim Umkehrpunkt Null ist und wobei der Gewindeerzeugungsbereich des Werkzeugs während der Abbremsbewegung wenigstens eine, insbesondere geschlossene oder ringförmige, Umfangsnut in dem Werkstück erzeugt,
d) das Übersetzungsverhältnis der Übersetzungseinheit (16) maximal 1:3 beträgt.

12. Verfahren nach Anspruch 11, bei dem das Übersetzungsverhältnis zwischen 1:3 und 1:10, insbesondere zwischen 1:4 und 1:8, vorzugsweise zwischen 1:4 und 1:5, gewählt ist.

13. Verfahren nach Anspruch 11 oder Anspruch 12, bei dem das Werkzeug ferner wenigstens einen Bohrbereich umfasst und bei dem während der Arbeitsbewegung in der ersten Arbeitsphase der Bohrbereich des Werkzeugs ein Kernloch in dem Werkstück erzeugt und der Gewindeerzeugungsbereich den Gewindegang in der Innenwandung des von dem Bohrbereich erzeugten Kernloches erzeugt.

## Claims

1. Tool coupling device for coupling a tool, in particular a tool for producing a thread or a threaded hole, to a drive, in particular a drive of a machine tool, comprising
a) a drive shaft (90) for coupling to the drive,
b) an output shaft (12) for coupling to the tool (2), wherein the output shaft (12) rotates or is rotatable about a central axis (A),
c) a transmission unit (16) which is connected between the drive shaft (90) and the output shaft (12) and, in accordance with a transmission ratio, translates a rotary movement of the drive shaft (90) at an input speed (n_{S} ) into a rotary movement of the output shaft (12) at an output speed (n_{W} ) which is greater than the input speed (n_{S} ), and
d) a non-rotating housing (100),
e) wherein the transmission unit (16) and at least one part (95, 95A, 95B, 95C) of the drive shaft (90) coupled to the transmission unit (16) as well as a part (18, 20, 15) of the output shaft (12) coupled to the transmission unit (16) are arranged inside the housing (100),
f) wherein the drive shaft (90) is rotatably mounted on or in the housing (100) and
g) wherein the output shaft (12) is rotatably mounted exclusively on or in the drive shaft (90) and is not rotatably mounted on or in the housing (100),
h) in which the drive shaft (90), viewed in the axial direction with respect to the central axis (ZA), has an adapter (91) for coupling to the drive and a carrier section (95), the carrier section (95) having a rear bearing section (95A), at least one intermediate section (95B) for coupling the transmission unit (16) and a front bearing section (95C) which ends at an end face (95A), the front bearing section (95C) and its end face (95A), each intermediate section (95B) and the rear bearing section (95A) which ends at an end face (95A), wherein the front bearing section (95C) and its end face (95A), each intermediate section (95B) and the rear bearing section (95A) are arranged inside the housing (100) and the adapter (91) is arranged outside the housing (100),
i) wherein the housing (100) has a first opening (110) for sealed passage of the output shaft (12) and a second opening (111) for sealed passage of the drive shaft (90) and also the output shaft (12), and the central axis (ZA) extends through the first opening (110) and also the second opening (111),
j) wherein the first opening (110) is formed in an end wall of the housing (100), and
k) wherein the front bearing section (95C) of the drive shaft (90) extends forwards to just in front of the front housing wall and lies with the end face (90A) opposite the front housing wall.

2. Tool coupling device according to claim 1, in which the output shaft (12) is spaced apart from the housing (100) and/or is decoupled from the housing (100) in such a way that housing vibrations are not transmitted directly from the housing (100) to the output shaft (12).

3. Tool coupling device according to claim 1 or claim 2, in which the output shaft (12), viewed in the axial direction with respect to the central axis (ZA), has a holding section (19) for holding the tool (2) or a tool holder (10) for the tool, a front bearing section (18), a coupling section (20) for coupling to the transmission unit (16) and a rear bearing section (15) and preferably also an end section (8), wherein the front bearing section (18), the coupling section (20) and the rear bearing section (15) are arranged inside the housing (100) and the holding section (19) and optionally also at least partially the end section (8) is or are arranged outside the housing (100).

4. Tool coupling device according to one of the preceding claims, in which the output shaft (12) is arranged at least partially within a cavity (94) of the drive shaft (90) or is at least partially surrounded by the drive shaft (90) and/or in which the output shaft (12) and/or the drive shaft (90) are preferably extended along the central axis (ZA) and/or are or is at least largely rotationally symmetrical about the central axis (ZA)
and/or in which the output shaft (12) is designed as a one-piece and/or continuous rigid body of rotation and/or in which the output shaft (12) as a whole or at least its carrier section (95) is designed as a one-piece and/or continuous rigid body of rotation, and/or in which an axially continuous central internal channel (13) for supplying coolant and/or lubricant to the tool (2) extends within the output shaft (12), for example via a transfer tube (7) in the adapter (91) and via a transfer unit (14) within the output shaft (12) at both ends of the internal channel (13).

5. Tool coupling device according to one of the preceding claims, in which the transmission unit (16) comprises a gear transmission, in particular a planetary gear, the gear transmission comprising a central gear (64), an outer gear ring (69), which is firmly connected to the housing (100) and has an internal toothing (68), and one or more intermediate gears (61, 62 and 63) arranged between the central gear (64) and the internal toothing (68), each of which engages with its external toothing in the external toothing of the central gear (64) and in the internal toothing (68) on the gear ring (69), wherein the central gear (64) is non-rotatably connected to the output shaft (12) on its coupling section (20) and preferably the central axis (ZA) represents the axis of rotation of the central gear (64),
wherein preferably the axes of rotation of the intermediate gears (61, 62, 63) are parallel to the central axis (ZA).

6. Tool coupling device according to claim 5, in which each intermediate gear wheel (61, 62, 63) is inserted into a wheel receptacle (71, 72, 73) formed as a cutout in the drive shaft (90), in particular in the carrier section (95), wherein, in the case of a plurality of wheel receptacles (71, 72, 73), an intermediate section (95B) of the carrier section (95) is located between two wheel mountings in the circumferential direction and wherein preferably the axial thickness of the wheel mounting(s) (71, 72, 73) essentially corresponds to the axial thickness of the gear ring (69),
and/or in which each intermediate gear (61, 62, 63) is rotatably mounted on an associated axle pin (65, 66, 67), each axle pin (65, 66, 67) is preferably introduced at the end face (90A) into the front bearing section (95C) of the carrier section (95) and extends through a central bearing hole in the respective intermediate gear (61, 62, 63) through the associated wheel receptacle (71, 72, 73) into the rear bearing section (95A) of the carrier section (95).

7. Tool coupling device according to one of the preceding claims, in which the drive shaft (90) is rotatably mounted in the housing (100) via front bearings, preferably rolling bearings (97B), and rear bearings, preferably rolling bearings (97A), arranged axially to the central axis (ZA) on opposite sides of the transmission unit (16), which are each preferably arranged in the immediate vicinity of the transmission unit (16), wherein in particular the front bearings (97B) are arranged on the front bearing section (95C) of the carrier section (95) and the rear bearings (97A) are arranged on the rear bearing section (95A) of the carrier section (95).

8. Tool coupling device according to one of the preceding claims, and/or in which the output shaft (12) is rotatably mounted on or in the drive shaft (90) via front bearings, preferably rolling bearings (98), and rear bearings, preferably rolling bearings (96), arranged axially to the central axis (ZA) on opposite sides of the transmission unit (16), wherein in particular the front bearings (98) are arranged between the front bearing section (95C) of the carrier section (95) and the front bearing section (18) of the output shaft (12) and the rear bearings (96) are arranged between the rear bearing section (95A) of the carrier section (95) and the rear bearing section (15) of the output shaft (12) and/or wherein the front bearings (98) and/or the rear bearings (96) are designed as axial bearings, in order to absorb axial forces, in particular axial forces coming from the tool (2) or the output shaft (12).

9. Tool coupling device according to claim 7 or claim 8, wherein the rear bearings (97A) between the drive shaft (90) and the housing (100) and the rear bearings (96) between the drive shaft (90) and the output shaft (12) do not overlap in a radial projection onto the central axis (ZA)
and/or in which the front bearings (98) between the drive shaft (90) and the output shaft (12) start axially in the immediate vicinity of the transmission unit (16) and extend in the axial direction to the central axis (ZA) over the predominant part of the front bearing section (95C) of the carrier section (95) and/or up to the vicinity of the end face (90A).

10. Tool coupling device according to one of the preceding claims, having a rotary fixing unit (9) for absorbing the torques acting through the transmission unit (16).

11. Method for producing a thread or threaded hole in a workpiece, in which
a) a tool coupled to a drive with a tool coupling device according to one of the preceding claims is used to create a thread or threaded hole with a thread creation area,
b) the tool is moved into the workpiece in a working movement during a first working phase, wherein the working movement comprises a rotary movement with a predetermined direction of rotation (VD) about the central axis (ZA) and an axial feed movement of the tool synchronised with the rotary movement in an axial forward direction axially to the central axis (ZA) in accordance with the thread pitch, in such a way that one full rotation of the tool corresponds to an axial feed of the tool by the predetermined thread pitch, and wherein the thread-forming region during the first working phase in the working movement produces a thread in the workpiece running in the predetermined thread pitch,
c) the tool is moved further into the workpiece in a braking movement during a second working phase following the first working phase up to a reversal point, wherein the axial feed of the tool relative to a full revolution is smaller in amount than the thread pitch at least during part of the braking movement, preferably during the entire braking movement, and is zero at the reversal point, and wherein the thread-generating region of the tool generates at least one, in particular closed or annular, circumferential groove in the workpiece during the braking movement,
d) the transmission ratio of the transmission unit (16) is a maximum of 1:3.

12. Method according to claim 11, in which the transmission ratio is selected between 1:3 and 1:10, in particular between 1:4 and 1:8, preferably between 1:4 and 1:5.

13. Method according to claim 11 or claim 12, wherein the tool further comprises at least one drilling portion and wherein during the working movement in the first working phase the drilling portion of the tool produces a core hole in the workpiece and the thread producing portion produces the thread in the inner wall of the core hole produced by the drilling portion.

## Revendications

1. Dispositif de couplage d'outil pour coupler un outil, en particulier un outil pour réaliser un filetage ou un trou taraudé, à un entraînement, en particulier un entraînement d'une machine-outil, comprenant
a) un arbre d'entraînement (90) destiné à être couplé à l'entraînement,
b) un arbre de sortie (12) destiné à être couplé à l'outil (2), l'arbre de sortie (12) tournant ou pouvant tourner autour d'un axe central (A),
c) une unité de transmission (16) qui est connectée entre l'arbre d'entrée (90) et l'arbre de sortie (12) et qui, selon un rapport de transmission, transforme un mouvement de rotation de l'arbre d'entrée (90) avec une vitesse d'entrée (n_{S} ) en un mouvement de rotation de l'arbre de sortie (12) avec une vitesse de sortie (n_{W} ) qui est supérieure à la vitesse d'entrée (n_{S} ), et
d) un boîtier non rotatif (100),
e) dans lequel l'unité de transmission (16) et au moins une partie (95, 95A, 95B, 95C) de l'arbre d'entrée (90) couplée à l'unité de transmission (16) et une partie (18, 20, 15) de l'arbre de sortie (12) couplée à l'unité de transmission (16) sont disposées à l'intérieur du boîtier (100),
f) l'arbre d'entraînement (90) étant monté en rotation sur ou dans le boîtier (100), et
g) dans lequel l'arbre de sortie (12) est exclusivement monté en rotation sur ou dans l'arbre d'entrée (90) et n'est pas monté en rotation sur ou dans le boîtier (100),
h) dans lequel l'arbre d'entraînement (90), vu dans la direction axiale par rapport à l'axe central (ZA), comprend un adaptateur (91) destiné à être couplé à l'entraînement et une partie de support (95), la partie de support (95) comprenant une partie de palier arrière (95A), au moins une partie intermédiaire (95B) destinée à coupler l'unité de transmission (16) et une partie de palier avant (95C), se terminant à une face d'extrémité (95A), la partie de support avant (95C) et sa face d'extrémité (95A), chaque partie intermédiaire (95B) et la partie de support arrière (95A) étant disposées à l'intérieur du boîtier (100) et l'adaptateur (91) étant disposé à l'extérieur du boîtier (100),
i) dans lequel le boîtier (100) comprend une première ouverture (110) pour le passage étanche de l'arbre de sortie (12) et comprend une seconde ouverture (111) pour le passage étanche de l'arbre d'entrée (90) et également de l'arbre de sortie (12), et l'axe central (ZA) passe à travers la première ouverture (110) et également la seconde ouverture (111),
j) dans lequel la première ouverture (110) est formée dans une paroi frontale du boîtier (100) et
k) dans lequel la partie de palier avant (95C) de l'arbre d'entraînement (90) s'étend vers l'avant jusqu'à peu de temps avant la paroi de boîtier frontale et fait face par la face frontale (90A) à la paroi de boîtier frontale.

2. Dispositif de couplage d'outil selon la revendication 1, dans lequel l'arbre de sortie (12) est espacé du boîtier (100) et/ou est découplé du boîtier (100) de telle sorte que les vibrations du boîtier ne sont pas transmises directement du boîtier (100) à l'arbre de sortie (12).

3. Dispositif de couplage d'outil selon la revendication 1 ou la revendication 2, dans lequel l'arbre de sortie (12), vu dans la direction axiale par rapport à l'axe central (ZA), comprend une partie de maintien (19) pour maintenir l'outil (2) ou un porte-outil (10) pour l'outil, une partie de palier avant (18), une section de couplage (20) pour le couplage à l'unité de transmission (16) et une section de palier arrière (15) ainsi que, de préférence, également une section d'extrémité (8), la section de palier avant (18), la section de couplage (20) et la section de palier arrière (15) étant disposées à l'intérieur du boîtier (100) et la section de retenue (19) et, le cas échéant, la section d'extrémité (8) étant disposées à l'extérieur du boîtier (100). la section d'extrémité (8) est ou sont disposées au moins partiellement à l'extérieur du boîtier (100).

4. Dispositif de couplage d'outil selon l'une des revendications précédentes, dans lequel l'arbre de sortie (12) est disposé au moins partiellement à l'intérieur d'une cavité (94) de l'arbre d'entraînement (90) ou est entouré au moins partiellement par l'arbre d'entraînement (90) et/ou dans lequel l'arbre de sortie (12) et/ou l'arbre d'entraînement (90) sont ou sont réalisés de préférence étendus le long de l'axe central (ZA) et/ou au moins largement à symétrie de révolution autour de l'axe central (ZA).
et/ou dans lequel l'arbre de sortie (12) est réalisé sous la forme d'un corps de révolution rigide d'une seule pièce et/ou d'un seul tenant et/ou dans lequel l'arbre d'entraînement (12) dans son ensemble ou au moins sa section de support (95) est réalisé sous la forme d'un corps de révolution rigide d'une seule pièce et/ou d'un seul tenant, et/ou dans lequel, à l'intérieur de l'arbre de sortie (12), un canal intérieur central (13) s'étend axialement de part en part pour amener un agent de refroidissement et/ou de lubrification à l'outil (2), par exemple via un tube de transfert (7) dans l'adaptateur (91) et via une unité de transfert (14) à l'intérieur de l'arbre de sortie (12) aux deux extrémités du canal intérieur (13).

5. Dispositif de couplage d'outil selon l'une des revendications précédentes, dans lequel l'unité de transmission (16) comprend un engrenage, notamment un engrenage planétaire, l'engrenage comprenant une roue dentée centrale (64), une bague d'engrenage extérieure (69) solidaire du boîtier (100) et présentant une denture intérieure (68), ainsi qu'une ou plusieurs roues dentées intermédiaires (61, 62 et 63) qui s'engrènent respectivement par leurs dentures extérieures dans la denture extérieure de la roue dentée intérieure (64) et dans la denture intérieure (68) sur la bague de transmission (69), la roue dentée centrale (64) étant reliée solidairement en rotation à l'arbre de sortie (12) sur sa section d'accouplement (20) et de préférence l'axe central (ZA) représentant l'axe de rotation de la roue dentée centrale (64),
dans lequel, de préférence, les axes de rotation des roues dentées intermédiaires (61, 62, 63) sont parallèles à l'axe central (ZA).

6. Dispositif de couplage d'outil selon la revendication 5, dans lequel chaque roue dentée intermédiaire (61, 62, 63) est insérée dans un logement de roue (71, 72, 73) réalisé sous forme de découpe dans l'arbre d'entraînement (90), en particulier dans le tronçon de support (95), dans lequel, dans le cas de plusieurs logements de roue (71, 72, 73), une section intermédiaire (95B) de la section de support (95) se trouve respectivement entre deux logements de roue dans la direction circonférentielle, et dans lequel, de préférence, l'épaisseur axiale du ou des logements de roue (71, 72, 73) correspond essentiellement à l'épaisseur axiale de la bague de transmission (69),
et/ou dans lequel chaque roue dentée intermédiaire (61, 62, 63) est montée à rotation sur un axe associé (65, 66, 67), chaque axe (65, 66, 67) est inséré de préférence sur le côté frontal (90A) dans la section de palier avant (95C) de la section de support (95) et s'étend à travers un trou de palier central dans la roue dentée intermédiaire respective (61, 62, 63) à travers le logement de roue associé (71, 72, 73) jusque dans la section de palier arrière (95A) de la section de support (95).

7. Dispositif de couplage d'outil selon l'une des revendications précédentes, dans lequel l'arbre d'entraînement (90) est monté dans le carter (100) par l'intermédiaire de paliers avant, de préférence des paliers à roulement (97B), et de paliers arrière, de préférence des paliers à roulement (97A), disposés axialement par rapport à l'axe central (ZA) sur des côtés opposés de l'unité de transmission (16), qui sont respectivement disposés de préférence à proximité immédiate de l'unité de transmission (16), les paliers avant (97B) étant notamment disposés sur la partie de palier avant (95C) de la section de support (95) et les paliers arrière (97A) étant disposés sur la partie de palier arrière (95A) de la section de support (95).

8. Dispositif de couplage d'outil selon l'une quelconque des revendications précédentes, et/ou dans lequel l'arbre de sortie (12) est monté en rotation sur ou dans l'arbre d'entrée (90) par l'intermédiaire de paliers avant, de préférence des paliers à roulement (98), et de paliers arrière, de préférence des paliers à roulement (96), disposés axialement par rapport à l'axe central (ZA) sur des côtés opposés de l'unité de transmission (16), les paliers avant (98) étant notamment disposés entre la section de palier avant (95C) de la section de support (95) et la section de palier avant (18) de l'arbre de sortie (12) et les paliers arrière (96) étant disposés entre la section de palier arrière (95A) de la section de support (95) et la section de palier arrière (15) de l'arbre de sortie (12) et/ou les paliers avant (98) et/ou les paliers arrière (96) étant conçus comme des paliers axiaux, pour absorber les forces axiales, en particulier les forces axiales provenant de l'outil (2) ou de l'arbre de sortie (12).

9. Dispositif de couplage d'outil selon la revendication 7 ou la revendication 8, dans lequel les paliers arrière (97A) entre l'arbre d'entrée (90) et le boîtier (100) et les paliers arrière (96) entre l'arbre d'entrée (90) et l'arbre de sortie (12) ne se chevauchent pas dans une projection radiale sur l'axe central (ZA).
et/ou dans lequel les paliers avant (98) entre l'arbre d'entrée (90) et l'arbre de sortie (12) commencent, vu axialement, à proximité immédiate de l'unité de transmission (16) et s'étendent dans la direction axiale vers l'axe central (ZA) sur la majeure partie de la section de palier avant (95C) de la section de support (95) et/ou jusqu'à proximité de la face frontale (90A).

10. Dispositif de couplage d'outil selon l'une des revendications précédentes, comprenant une unité de fixation en rotation (9) destinée à absorber les couples de rotation exercés par l'unité de transmission (16).

11. Procédé de réalisation d'un filet ou d'un trou taraudé dans une pièce, dans lequel
a) un outil couplé à un dispositif de couplage d'outil selon l'une des revendications précédentes à un entraînement est utilisé pour produire un filet ou un trou taraudé avec une zone de production de filet,
b) l'outil est déplacé dans la pièce à usiner dans un mouvement de travail pendant une première phase de travail, le mouvement de travail comprenant un mouvement de rotation avec un sens de rotation prédéfini (VD) autour de l'axe central (ZA) et un mouvement d'avance axial de l'outil dans une direction axiale vers l'avant axialement par rapport à l'axe central (ZA) synchronisé avec le mouvement de rotation selon le pas de filetage, de telle sorte qu'à une rotation complète de l'outil corresponde une avance axiale de l'outil du pas de filetage prédéterminé, et dans lequel la zone de génération de filetage génère dans la pièce à usiner, pendant la première phase de travail, un pas de filetage s'étendant sous le pas de filetage prédéterminé dans le mouvement de travail,
c) l'outil est déplacé dans un mouvement de freinage pendant une deuxième phase de travail à la suite de la première phase de travail plus loin dans la pièce à usiner jusqu'à un point d'inversion, l'avance axiale de l'outil par rapport à une rotation complète étant inférieure en valeur absolue au pas de filetage au moins pendant une partie du mouvement de freinage, de préférence pendant la totalité du mouvement de freinage, et étant nulle au point d'inversion, et la zone de production de filetage de l'outil produisant pendant le mouvement de freinage au moins une rainure périphérique, en particulier fermée ou annulaire, dans la pièce à usiner,
d) le rapport de transmission de l'unité de transmission (16) est au maximum de 1:3.

12. Procédé selon la revendication 11, dans lequel le rapport de transmission est choisi entre 1:3 et 1:10, en particulier entre 1:4 et 1:8, de préférence entre 1:4 et 1:5.

13. Procédé selon la revendication 11 ou la revendication 12, dans lequel l'outil comprend en outre au moins une zone de perçage et dans lequel, pendant le mouvement de travail dans la première phase de travail, la zone de perçage de l'outil crée un trou de carotte dans la pièce à usiner et la zone de génération de filet crée le filet dans la paroi interne du trou de carotte créé par la zone de perçage.
